**Europäisches Patentamt**

**European Patent Office**

**Office européen des brevets**

(11) Veröffentlichungsnummer: **0 039 069**
A2

# (12) EUROPÄISCHE PATENTANMELDUNG

(21) Anmeldenummer: **81103137.6**

(22) Anmeldetag: **27.04.81**

(51) Int. Cl.³: **B 60 K 41/26**
//B60K17/34, F16H3/08

(30) Priorität: **30.04.80 DE 3016788**

(43) Veröffentlichungstag der Anmeldung:
**04.11.81 Patentblatt 81/44**

(84) Benannte Vertragsstaaten:
**DE FR GB**

(71) Anmelder: **INTERNATIONAL HARVESTER COMPANY MBH**
**Industriestrasse 39**
**D-4040 Neuss(DE)**

(84) Benannte Vertragsstaaten:
**DE**

(71) Anmelder: **INTERNATIONAL HARVESTER COMPANY**
**401 North Michigan Avenue**
**Chicago IL 60611(US)**

(84) Benannte Vertragsstaaten:
**FR GB**

(72) Erfinder: **Römer, Friedrich Wilhelm**
**Karlstrasse 24**
**D-4040 Neuss 21(DE)**

(74) Vertreter: **Zoepke, Carl O.**
**Erhardtstrasse 8**
**D-8000 München 5(DE)**

(54) **Antriebs- und Bremsanordnung für allradgetriebene Kraftfahrzeuge, insbesondere Ackerschlepper.**

(57) Es wird eine Antriebs- und Bremsanordnung für allradgetriebene Kraftfahrzeuge, insbesondere Ackerschlepper, vorgeschlagen, die mit einer dauernd angetriebenen, durch eine Betriebsbremse (14, 15) abbremsbaren ersten Achse (13) und einer über eine einrückbare Kupplung (22) eines Verteilergetriebes (21) wahlweise in den Antrieb zuschaltbaren zweiten Achse (26) versehen ist. Um die Bremswirkung des Kraftfahrzeugs sicherzustellen, insbesondere dann, wenn die abbremsbare Achse (13) durch ungünstige Achslastverteilung entlastet ist, sind erfindungsgemäß die Betriebsbremse (14, 15) und die Kupplung (22) durch ein Übertragungsgestänge (30) derart miteinander gekoppelt, daß beim Betätigen der Betriebsbremse (14, 15) die Kupplung (22) zwangsläufig ihre eingerückte Stellung einnimmt. Das Übertragungsgestänge weist beim Ausführungsbeispiel eine von einer Druckmittelquelle (32) der Betriebsbremse (14, 15) zur Kupplung (22) abzweigende Leitung (36) und eine strömungsmäßig gesehen vor der Kupplung (22) in der Leitung (36) angeordnete Zylinder-Kolben-Einheit (37) auf. Durch das Beaufschlagen der einen oder der beiden Betriebsbremsen (14, 15) wird die erste Achse (13) abgebremst. Gleichzeitig wird Druckflüssigkeit über die Bremsleitung (35) und die Leitung (36) in die Zylinder-Kolben-Einheit (37) geleitet, von wo aus Druck über die Leitung (38) zur Kupplung (22) gelangt, so daß diese zwangsläufig bei Betätigung der Betriebsbremsen ihre eingerückte Lage einnimmt, wodurch zwangsläufig der Vorderradantrieb eingeschaltet ist.

- 1 -

ANTRIEBS- UND BREMSANORDNUNG FÜR ALLRADGETRIEBENE

KRAFTFAHRZEUGE, INSBESONDERE ACKERSCHLEPPER

Die Erfindung bezieht sich auf eine Antriebs- und Bremsanordnung für allradgetriebene Kraftfahrzeuge, insbesondere Ackerschlepper, mit einer von einem Antriebsmotor über Schalt- und Achsgetriebe dauernd angetriebenen, durch eine Betriebsbremse abbremsbaren ersten Achse und einer über eine einrückbare Kupplung eines Verteilergetriebes wahlweise in den Antrieb zuschaltbaren zweiten Achse.

Eine Kraftübertragungsvorrichtung dieser prinzipiellen Art geht aus der DE-OS 1 960 780 hervor. Bei in der Landwirtschaft genutzten Fahrzeugen, wie Ackerschleppern, ist es wegen des speziellen Einsatzes notwendig, eine ausgewogene Gewichtskompensation der Achslasten vorzunehmen. Ackerschlepper sind dazu eingerichtet, unter anderem schwere Anbaugeräte aufzunehmen, wobei die Achsbelastung der Hinterachse sehr beträchtlich ist und die Gefahr besteht, daß der Ackerschlepper an der Vorderachse keine Bodenhaftung mehr findet. Aus diesem Grunde ist es üblich, die Vorderachse durch Zusatzgewichte zu belasten, um die notwendige Gewichtskompensation zu erreichen. Sofern nun die Betriebsbremse nur der Hinterachse zugeordnet ist, kommt es bei getrenntem Kraftfluß zur zweiten Achse zu einer verringerten Bremswirkung, insbesondere dann, wenn die gebremste Hinterachse bei Leerfahrten, also ohne Anbaugerät, durch ungünstige Achslastverteilung entlastet ist.

Aus der US-PS 3 963 085 ist eine Antriebsanordnung für Kraftfahrzeuge bekannt, bei der zum Einstellen der Parkstellung über eine manuell betätigbare Nockensteuerung in einer bestimmten Stellung eines zur Nockensteuerung gehörenden Handhebels drei Steuerventile gesteuert werden, wodurch die Kupplung für den Vorderradantrieb und die Kupplung für den Hinterradantrieb eingerückt werden sowie eine Bremse betätigt wird. Jedoch handelt es sich hierbei um die Parkbremse und nicht um die Betriebsbremse.

Diese Art der Steuerung hat den Nachteil, daß nur in einer ganz bestimmten Stellung des Handhebels die Parkstellung eingestellt werden kann, um die vordere und die hintere Achse zu blockieren.

Bei einer Steuervorrichtung für die hydraulische Betätigung der Kupplung und der Radbremsen eines Hubstaplers nach der DE-AS 1 530 485 wirkt zwar der Druck in einem Geberzylinder beim Betätigen des Kupplungspedals sowohl in den Radbremszylindern als auch in einem Stellzylinder zum Ausrücken einer Rutschkupplung. Die wirksamen Querschnitte der Kolben in den Radbremszylindern und dem Stellzylinder sind jedoch so bemessen, daß der vom Kolben im Geberzylinder ausgeübte Druck zunächst nur den Kolben im Stellzylinder für die Rutschkupplung bewegt und damit die Rutschkupplung ausrückt, die zwischen der Kurbelwelle einer Hauptantriebsmaschine und einem hydraulischen Drehmomentwandler bzw. dem Achsgetriebe angeordnet ist. Es handelt sich hierbei um eine Kupplung mit andersartiger Aufgabe.

Die Erfindung geht nun von der Erkenntnis aus, daß eine Antriebs- und Bremsanordnung bei Kraftfahrzeugen, insbesondere Ackerschleppern, auf überaus einfache Art eine wesentlich bessere Abbremsung des Kraftfahrzeuges ermöglicht, wenn die Antriebsanordnung und die Bremsanordnung in einer ganz bestimmten Weise miteinander verknüpft werden.

Der Erfindung liegt daher die Aufgabe zugrunde, eine Antriebs- und Bremsanordnung der eingangs genannten Art zu schaffen, die eine ausgezeichnete Bremswirkung des Kraftfahrzeuges, insbesondere eines Ackerschleppers sicherstellt, vornehmlich dann, wenn die abgebremste Achse durch ungünstige Achslastverteilung entlastet ist.

Diese Aufgabe wird erfindungsgemäß bei einer Antriebs- und Bremsanordnung der eingangs genannten Gattung dadurch gelöst, daß die Betriebsbremse und die Kupplung durch ein Übertragungsgestänge derart miteinander gekoppelt sind, daß beim Betätigen der Betriebsbremse die Kupplung zwangsläufig ihre eingerückte Stellung einnimmt.

Auf diese Weise wird ohne zusätzliche Bremsen an der zweiten Achse eine Allradbremsung sichergestellt, und zwar dadurch, daß beim Betätigen der Betriebsbremse an der ersten Achse ein selbsttätiges Sperren der Trennkupplung erfolgt, so daß der Vorderantrieb in diesem Fall automatisch eingeschaltet ist.

Gegenüber der aus der US-PS 3 963 085 bekannten Bauart, bei der nur in einer ganz bestimmten Stellung des Handhebels der Nockensteuerung die Parkstellung eingestellt werden kann, läßt sich bei der erfindungsgemäß ausgebildeten Anordnung bei Betätigung des Bremspedals zu jeder Zeit und unabhängig von der Stellung des Getriebes Druck über den Hauptbremszylinder zu der Kupplung und damit auf den Vorderradantrieb leiten.

Im Vergleich zu der in der Bauart nach der DE-AS 1 530 485 verwendeten Rutschkupplung wird diese bei Betätigung des Kupplungspedals nicht ausgerückt, sondern beim Betätigen der Betriebsbremse eingerückt.

Das zwangsweise Koppeln der Betriebsbremse der ersten Achse und der Trennkupplung kann auf beliebige Weise geschehen. So kann das Übertragungsgestänge mechanische, pneumatische, hydraulische oder elektrische Schaltelemente aufweisen.

Vorzugsweise ist dieses Übertragungsgestänge jedoch hydraulisch ausgebildet. In diesem Fall weist das Übertragungsgestänge eine von einer Druckmittelquelle der Betriebsbremse zur Kupplung abzweigende Leitung und eine strömungsmäßig gesehen vor der Kupplung in der Leitung angeordnete Zylinder-Kolben-Einheit auf.

Die Kupplung ist zweckmäßigerweise als Lamellenkupplung ausgebildet.

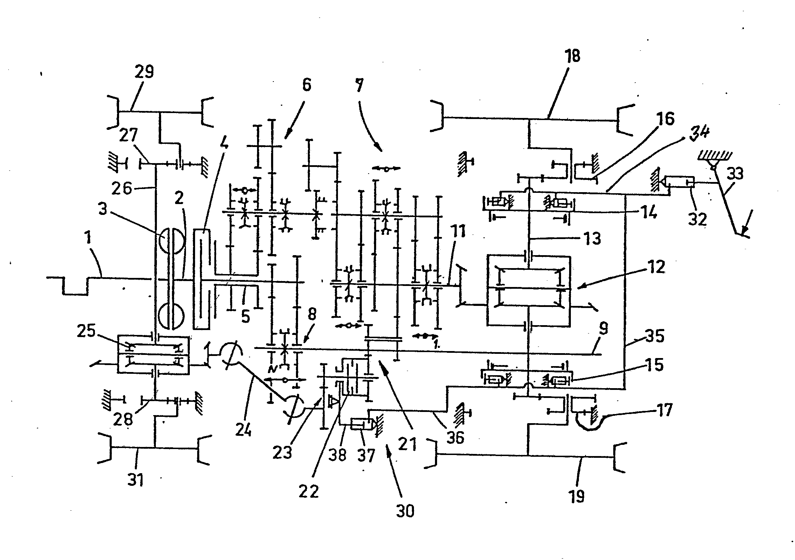

Der Gegenstand der Erfindung ist in der einzigen Figur der Zeichnung beispielsweise dargestellt.

In dem dargestellten Getriebeschema treibt ein nicht gezeigter Antriebsmotor über eine Kurbelwelle 1 eine Antriebswelle 2 an, auf der nacheinander eine hydrokinetische Kupplung 3 und eine schaltbare Fahrzeugkupplung 4 sitzen.

Die Antriebswelle 2 ist von einer Hohlwelle 5 umgeben, über die in hier im einzelnen nicht interessierender Weise ein Zwischengetriebe 6 und ein Gangschaltgetriebe 7 angetrieben werden. Von der Antriebswelle 2 ist über ein Zapfwellengetriebe 8 eine Zapfwelle 9 antreibbar. Eine Antriebswelle 11 des Gangschaltgetriebes 7 ist über ein Ausgleichgetriebe 12 mit einer ersten, als Hinterachse des Fahrzeugs ausgebildeten Achse 13 antriebsmäßig verbunden, auf deren jeder Seite eine Betriebsbremse 14, 15 sitzt. Den Betriebsbremsen 14, 15 ist jeweils ein Radachsgetriebe 16, 17 nachgeschaltet, über das die Hinterräder 18, 19 des Kraftfahrzeugs antreibbar sind.

Von dem Gangschaltgetriebe 7 wird ein Verteilergetriebe 21 angetrieben, das eine als Lamellenkupplung ausgebildete Kupplung 22 aufweist. Dieser Kupplung ist ein Zahnradpaar 23 nachgeschaltet, das über eine Gelenkwelle 24 mit einem weiteren Ausgleichgetriebe 25 antriebsmäßig verbunden ist, welches einer zweiten als Vorderachse ausgebildeten Achse 26 zugeordnet ist. Über die Vorderachse 26 und ein zwischengeschaltetes Radachsgetriebe 27, 28 werden die Vorderräder 29, 31 des Fahrzeugs angetrieben. Zwischen den Betriebsbremsen 14, 15 und der Kupplung 22 ist ein weiter unten näher erläutertes hydraulisches Übertragungsgestänge 30 angeordnet.

Zur Beaufschlagung der Betriebsbremsen 14, 15 ist eine Druckmittelquelle in Gestalt eines Hauptbremszylinders 32 vorgesehen, der durch zwei nebeneinanderliegende Bremspedale 33 betätigt werden kann. Die Ausgangsseite des Hauptbremszylinders 32 ist über Bremsleitungen 34, 35 mit den Betriebsbremsen 14, 15 verbunden.

An die Bremsleitung 35 schließt sich eine weitere Leitung 36 an, die zu einer Zylinder-Kolben-Einheit 37 führt, deren andere Seite über eine Leitung 38 mit der hydraulisch beaufschlagbaren Kupplung 22 in Verbindung steht.

Die Wirkungsweise der Antriebs- und Bremsanordnung ist wie folgt:

Bei Betätigung des Bremspedals 33 wird vom Hauptbremszylinder 32 Druckflüssigkeit in die Bremsleitungen 34, 35 gefördert, so daß die Betriebsbremsen 14, 15 beaufschlagt werden. In diesem Fall sind die Bremspedale 33 in bekannter Weise mechanisch miteinander verbunden. Sofern eine Lenkbremsung durchgeführt werden soll, wird nur eines der Bremspedale betätigt, so daß jeweils nur die zugehörige Betriebs-

- 6 -

bremse mit Druck beaufschlagt wird.

Durch das Beaufschlagen der einen Betriebsbremse oder der beiden Betriebsbremsen 14, 15 wird die Hinterachse 13 abgebremst. Gleichzeitig wird Druckflüssigkeit über die Bremsleitung 35 und die Leitung 36 in die Zylinder-Kolben-Einheit 37 geleitet, von wo aus Druck über die Leitung 38 zur Kupplung 22 gelangt, so daß diese zwangsläufig bei Betätigung der Betriebsbremsen 14, 15 ihre eingerückte Lage einnimmt. Damit ist zwangsläufig der Vorderradantrieb eingeschaltet, so daß ohne zusätzliche Bremsen an der Vorderachse 26 eine gegenüber lediglich an der Hinterradachse erfolgenden Abbremsung eine bessere Abbremsung des Kraftfahrzeuges erfolgt.

Es versteht sich, daß die Erfindung sich nicht nur auf das dargestellte Ausführungsbeispiel bezieht, sondern im Rahmen der Ansprüche Abänderungen zuläßt. So kann das Übertragungsgestänge natürlich auch in anderer Weise als dargestellt ausgebildet sein, beispielsweise als mechanisches Gestänge. Ebenso ist denkbar, daß die Leistungsstufe von der bei einem Kraftfahrzeug, insbesondere einem Ackerschlepper, ohnehin vorhandenen hydraulischen oder pneumatischen Krafterzeugungsanlage abgeleitet wird, und entsprechende Steuerelemente für einen Steuerkreis vorgesehen sind.

0039069

PATENTANSPRÜCHE

1. Antriebs- und Bremsanordnung für allradgetriebene Kraftfahrzeuge, insbesondere Ackerschlepper, mit einer von einem Antriebsmotor über Schalt- und Achsgetriebe dauernd angetriebenen, durch eine Betriebsbremse abbremsbaren ersten Achse und einer über eine einrückbare Kupplung eines Verteilergetriebes wahlweise in den Antrieb zuschaltbaren zweiten Achse, dadurch gekennzeichnet, daß die Betriebsbremse (14, 15) und die Kupplung (22) durch ein Übertragungsgestänge (30) derart miteinander gekopppelt sind, daß beim Betätigen der Betriebsbremse (14, 15) die Kupplung (22) zwangsläufig ihre eingerückte Stellung einnimmt.

2. Antriebs- und Bremsanordnung nach Anspruch 1, dadurch gekennzeichnet, daß das Übertragungsgestänge (30) mechanische, pneumatische, hydraulische oder elektrische Schaltelemente aufweist.

0039069

3. Antriebs- und Bremsanordnung nach Anspruch 1 oder 2, dadurch gekennzeichnet, daß das Übertragungsgestänge (30) eine von einer Druckmittelquelle (32) der Betriebsbremse (14, 15) zur Kupplung (22) abzweigende Leitung (36) und eine strömungsmäßig gesehen vor der Kupplung (22) in der Leitung (36) angeordnete Zylinder-Kolben-Einheit (37) aufweist.

4. Antriebs- und Bremsanordnung nach einem oder mehreren der Ansprüche 1 bis 3, dadurch gekennzeichnet, daß die Kupplung (22) als Lamellenkupplung ausgebildet ist.